# EUROPEAN PATENT APPLICATION

(11) **EP 4 600 533 A1**
(43) Date of publication of application: **13.08.2025**
(21) Application number: 25155946.4
(22) Date of filing: 05.02.2025
(51) Int. Cl.: F16K 15/14, A47C 27/08, F16K 15/20

(54) **AIR VALVE AND INFLATABLE PRODUCT**

(30) Priority: 06.02.2024 CN 202420286395 U
(71) Applicant: Bestway Inflatables & Material Corp., Shanghai 201812 (CN)
(72) Inventor: ZHU, Qiang, Shanghai 201812 (CN)
(74) Representative: Inchingalo, Simona

(57) **Abstract**

An air valve includes a valve seat (10) including a first hollow tube member (11) defining a first air passage (12), a valve element (20) including a first opening (22) and a second hollow tube member (21) defining a second air passage (23), and being at least partially arranged in the first hollow tube member, a valve cap (40) at least partially arranged in the second hollow tube member and connected to the valve element by a first connecting strap (41), the valve cap including a first hand-held portion (31) extending outwards along an edge of the valve cap, a valve diaphragm (50) arranged in the second hollow tube member that opens and closes the second air passage, and a fixing ring (32) including an annular part (321) and a second hand-held portion (322) extending outwards along the annular part, the annular part being arranged on the first hollow tube member and being connected to the valve element by a second connecting strap (42).

## Description

### TECHNICAL FIELD

The present disclosure relates to inflatable products, and more particularly, to an air valve for an inflatable product.

### BACKGROUND

Air valves for inflatable products, such as an inflatable swimming pools, inflatable boats, and inflatable mattresses, are commonly used for inflating or deflating an inflatable product. Traditional air valves used to deflate exiting inflatable products often have complicated structures in which a valve element of the air valve is separated from a valve seat of the air valve to discharge air through an air passage of the inflatable product. Furthermore, in many conventional air valves, rapid deflation of the inflatable product may be achieved by a user grasping a surface material of the inflatable product with one hand and pulling out a valve plug with the other hand. Such rapid deflation may cause damage to the inflatable product and may cause the user to fail to easily pull the valve plug out of the valve seat due to hand slippage. Meanwhile, traditional air valves often include a complicated sealing structure that does not facilitate molding of the structure of the air valve and significantly increases the manufacturing cost of the air valve.

### SUMMARY

An objective of the present disclosure is to provide an air valve that allows for rapid deflation of an inflatable product, and avoids causing damage to the inflatable product due to dragging of a surface material of the inflatable product. In particular, the air valve described herein is provided with a hand-held portion to facilitate operation of the air valve for rapid deflation.

As will be described in detail herein, the present disclosure discloses an air valve, including a valve seat including a first hollow tube member defining a first air passage, a valve element including a first opening and a second hollow tube member defining a second air passage, the second hollow tube member being at least partially arranged in the first hollow tube member, a valve cap at least partially arranged in the second hollow tube member and connected to the valve element by means of a first connecting strap, the valve cap including a first hand-held portion extending outwards along an edge of the valve cap, a valve diaphragm arranged in the second hollow tube member and configured to open and close the second air passage, and a fixing ring including an annular part and a second hand-held portion extending outwards along the annular part, the annular part being arranged on the first hollow tube member and being connected to the valve element by means of a second connecting strap.

In some embodiments, the second hand-held portion is attached to the valve seat by means of the annular part, and the first hand-held portion is attached to the valve element by means of the first connecting strap. Accordingly, it may be convenient for a user to operate the air valve by means of gripping spaces provided by the first hand-held portion and the second hand-held portion when the user needs to open the valve cap of the air valve to slightly adjust an air pressure inside an inflatable product, or to unplug the valve element of the air valve for rapid deflation. In these embodiments, it is also possible to prevent the user from dragging the surface material of the inflatable product when operating the air valve to deflate the inflatable product, which may aid in avoiding damage to the inflatable product and prolonging the service life of the inflatable product.

In some embodiments, an angle of α is formed between an extension direction of the first hand-held portion and an extension direction of the second hand-held portion, wherein 0 < α ≤ 180°.

In some embodiments, the first hand-held portion includes a first hole, and/or the second hand-held portion includes a second hole.

In some embodiments, the air valve includes: a first annular flange arranged on an end portion of the second hollow tube member; and a second annular flange arranged on an end portion of the valve cap, wherein the first annular flange is connected to the second annular flange by means of the first connecting strap, and the first hand-held portion is attached to the second annular flange.

In some embodiments, the valve element further includes a limiting portion having a limiting space, the limiting portion being arranged on an upper surface of the first annular flange, and the second annular flange being arranged in the limiting space.

In some embodiments, the first connecting strap, the second connecting strap, the fixing ring, an edge of the valve element and the edge of the valve cap are integrally formed into an integral component, and the valve element and the valve cap that are connected to each other are arranged on the valve seat by means of the fixing ring. Accordingly, in these embodiments the integral component can be connected to the valve seat, thereby avoiding loss of the valve element and/or the valve cap from the valve seat when the air valve is in a completely opened or partially opened position.

In the embodiments described herein, the air valve may further include a limiting portion that includes a first projection and a second projection arranged on the upper surface of the first annular flange and spaced apart from the first projection in a circumferential direction of the second hollow tube member The first projection and the second projection jointly define the limiting space, and the limiting space comprises a first notch and a second notch, a portion of the second annular flange is arranged in the first notch, and a further portion of the second annular flange is arranged in the second notch.

In some embodiments, the second annular flange may be accommodated in the limiting space, and a side wall of the limiting portion will not interfere with the opening or closing of the valve cap. In addition, the limiting portion may also have the functions of positioning the valve cap and reducing the space occupied by the air valve.

In some embodiments, the valve seat includes a protrusion, the protrusion extending in a circumferential direction of the first hollow tube member and being arranged on an inner wall of the first hollow tube member; and the valve element comprises a sealing rib, the sealing rib extending in a circumferential direction of the second hollow tube member and being arranged on an outer wall of the second hollow tube member, the sealing rib is configured to abut against a lower surface of the protrusion in a radial direction of the first opening.

In some embodiments, the protrusion of the air valve is arranged on the valve seat of the air valve for abutting against the sealing rib on the outer wall of the second hollow tube member of the valve element, thereby achieving a sealing effect.

In some embodiments, the valve seat includes a connecting ring, the connecting ring being connected to the first hollow tube member, and the connecting ring being configured to connect the air valve to an inflatable product.

In some embodiments, the connecting ring is configured to fit flush and seal with the surface material of the inflatable product. For example, the connecting ring may be fastened or hermetically fitted to a material around a mounting hole of the inflatable product by means of a high-frequency welding process or gluing.

In some embodiments, the valve seat includes a third annular flange, the third annular flange extending radially outwards along an edge of the first hollow tube member and being arranged at a first end of the first hollow tube member; and the annular part is arranged between the connecting ring and the third annular flange.

In some embodiments, a combination of the first hand-held portion, the valve cap, the valve element and the second hand-held portion is arranged in a groove structure between the connecting ring and the third annular flange by means of the annular part, so as to maintain an integral component with the valve seat of the air valve.

In some embodiments, the valve element includes a base, the base being arranged in the second hollow tube member; and the valve diaphragm is arranged on the base.

In some embodiments, the base comprises a plurality of connecting arms and a positioning seat; the positioning seat is arranged in the middle of the second air passage, in any radial direction of the valve element, such that the positioning seat and the valve element are concentrically arranged.

In some embodiments, the length of each connecting arm in an extension direction may be greater than a shortest distance between the positioning seat and an inner wall of the second hollow tube member.

In some embodiments, the valve diaphragm comprises a valve diaphragm body having a sheet shape, a spherical portion and a shaft; the valve diaphragm body is fixed below the positioning seat, provided with a corresponding positioning hole, in the extension direction of the second hollow tube member, and the valve diaphragm body seals the first opening to prevent leakage of an inflatable product.

In some embodiments, the shaft is fixed to the valve diaphragm body and the other end of the shaft is fixed to the spherical portion, so when the user needs to deflate the inflatable product, the positioning seat and the spherical portion are pressed, and the valve diaphragm opens with the aid of deformation of the connecting arm to deflate the inflatable product.

In other embodiments still, the present disclosure further discloses an inflatable product, including: an inflatable body provided with a mounting hole; and an air valve of any of the above embodiments, the air valve being connected to the inflatable body by means of the connecting ring of the valve seat and being arranged in the mounting hole of the inflatable body.

As will be described in additional detail herein, the first hand-held portion and the second hand-held portion may allow for the user to conveniently operate the air valve to adjust the air pressure inside the inflatable product and achieve rapid deflation. In addition, the configuration of the first hand-held portion and the second hand-held portion allow for the user to operate the air valve without dragging any components from the air valve across the surface material of the inflatable product. Accordingly, the air valve described herein minimizes damage to the inflatable product, effectively prolonging the service life of the inflatable product.

Furthermore, the cooperation of the protrusion arranged on the inner wall of the valve seat and the sealing rib arranged on the outer wall of the valve element allows for the creating of a sealing effect while also facilitating molding of the air valve to reduce the cost of manufacture of the air valve.

### BRIEF DESCRIPTION OF THE DRAWINGS

Other features and advantages of the present disclosure will be understood from the following embodiments described in detail herein and with reference to the accompanying drawings, in which like reference numerals represent the same or similar components.
FIG. 1 shows a schematic diagram of an air valve mounted on an inflatable product, according to one or more embodiments shown and described herein;
FIG. 2 shows a schematic diagram of the air valve of FIG. 1 including a valve cap in an open position, according to one or more embodiments shown and described herein;
FIG. 3 shows a schematic diagram of the air valve of FIG. 1 including a valve element, according to one or more embodiments shown and described herein;
FIG. 4 shows a diagram of the air valve of FIG. 1, according to one or more embodiments shown and described herein;
FIG. 5 shows a cross-sectional view of the air valve of FIG. 1, according to one or more embodiments shown and described herein;
FIG. 6 shows a schematic diagram of the air valve of FIG. 1 in a partially opened state, according to one or more embodiments shown and described herein;
FIG. 7 shows a schematic diagram of the air valve of FIG. 1 in a fully opened state, according to one or more embodiments shown and described herein;
FIG. 8 shows a cross-sectional view of the air valve of FIG. 7, according to one or more embodiments shown and described herein;
FIG. 9 shows a schematic diagram of the air valve of FIG. 1 in which a valve element is removed from a valve seat of the air valve, according to one or more embodiments shown and described herein;
FIG. 10a shows an exploded view of the air valve of FIG. 1, according to one or more embodiments shown and described herein; and
FIG. 10b shows an exploded view of the air valve of FIG. 1, according to one or more embodiments shown and described herein.

### DETAILED DESCRIPTION

Embodiments of the present disclosure are illustrated below, and those skilled in the art may readily understand advantages and effects of the present disclosure from the content disclosed in the description. Although the description of the present disclosure will be introduced in conjunction with preferred embodiments, it does not mean that features of the present disclosure are limited to the implementations described herein. On the contrary, an objective of introducing the present disclosure in conjunction with the embodiments described herein is to encompass other options or modifications that may be extended on the basis of the claims of the present disclosure. The following description contains numerous specific details in order to provide deep understanding of the present disclosure. The present disclosure may also be implemented without these details. In addition, in order to avoid confusion of the present disclosure, some specific details will be omitted in the description. It should be noted that the embodiments and the features thereof in the present disclosure can be combined with each other without conflicts.

It should be noted that in the description, like reference numerals and letters denote like items in the following drawings. Therefore, once an item is defined in one of the drawings, it is not necessary to further define and explain the item in the subsequent drawings.

In the description of the present embodiments, it should be noted that the orientation or position relationships indicated by the terms such as "upper", "lower", "inner" and "bottom" are based on the orientation or position relationships shown in the drawings or the orientation or position relationships in which a product of the present disclosure is customarily placed during use, and are only intended to facilitate description of the present disclosure and simplify the description, rather than indicating or implying that the apparatus or element indicated must have a specific orientation or be configured and operated in the specific orientation, and therefore cannot be construed as limiting the present disclosure.

The terms "first", "second", etc. are only intended to distinguish the description, and should not be construed as indicating or implying the relative importance.

In the description of the embodiments, it should also be noted that the terms "arrange", "connected", and "connection" should be understood in a broad sense, unless otherwise explicitly specified and limited. For example, the connection may be a secured connection, a detachable connection, an integral connection, a mechanical connection or an electrical connection, a direct connection, an indirect connection by means of an intermediate medium, an internal communication between two elements, or any other similar connection without departing from the scope of the present disclosure.

In order to make objectives, technical solutions and advantages of the present disclosure clearer, embodiments of the present disclosure will be further described in detail below with reference to the drawings.

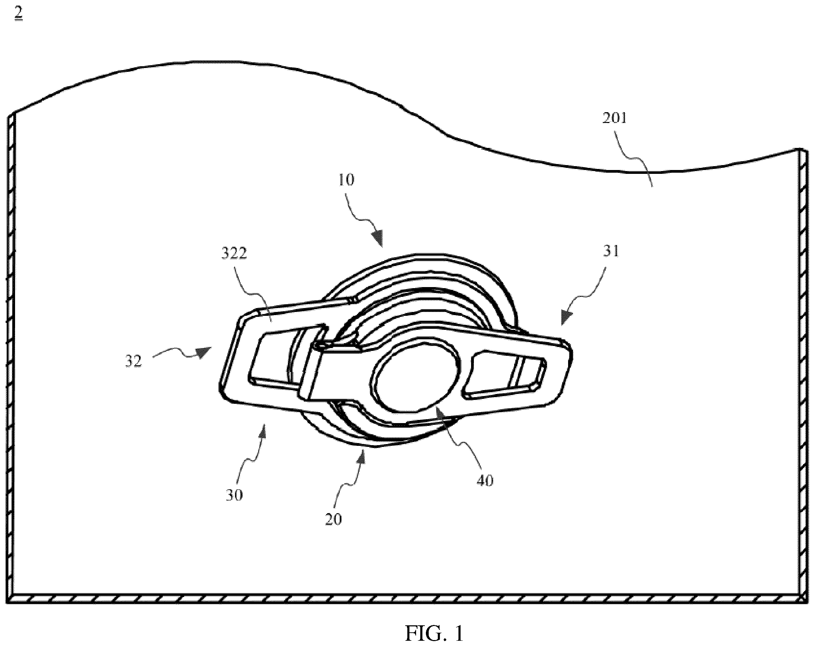

Referring now to FIGS. 1 - 4, an air valve 1 for use with an inflatable product 2 (e.g., an air mattress, such as a TPU air mattress) is depicted. The air valve 1 may inflate or deflate an inflatable product via an opening, such as a first opening 22, of a predetermined size. In some embodiments, the air valve 1 may further enable the inflatable product 2 to undergo rapid deflation through a second opening of another predetermined size, such as a first air passage 12 of a first hollow tube member 11. In these embodiments, the second opening of the first air passage 12 may have a size (e.g., diameter) that is greater than the predetermined size of the first opening 22 such that air may escape the first air passage 12 more quickly (e.g., relative to the first opening 22) and allow for rapid deflation of the inflatable product 2.

As further depicted most clearly in FIG. 1, the air valve 1 may include a valve seat 10, a valve element 20, a hand-held portion 30 and a valve cap 40, which may provide a compact and convenient-to-operate air valve assembly to inflate or rapidly deflate the inflatable product 2, as has been described hereinabove. In these embodiments, the hand-held portion 30 may also include a first hand held portion 31 and a second hand held portion 32, as will be described in additional detail herein.

Referring still FIG. 1, the inflatable product 2 may include an inflatable body 201, with the inflatable body 201 being provided with a mounting hole (e.g., in which the air valve 1 is received). In these embodiments, the air valve 1 is arranged in the mounting hole and is connected to the inflatable body 201 such that the air valve 1 is fixed onto and/or within the inflatable body 201. In the embodiments described herein, it should be appreciated that the inflatable product 2 may be formed of polyvinyl chloride (PVC), thermoplastic polyurethane (TPU), nylon fabric, rubberized fabric, polyester fabric, synthetic rubber (e.g., hypalon, etc.), or any other similar product capable of being inflated and/or deflated as described herein.

As further depicted in FIG. 1, the air valve 1 is in a closed position, such that the inflatable product 2 is prevented from discharging air through the air valve 1. In these embodiments, the air valve 1 may be connected to the inflatable body by means of high-frequency hot melt, high-frequency welding or bonding, or any other similar coupling without departing from the scope of the present disclosure. For example, the air valve 1 may be secured within the inflatable product 1 via any fixed coupling configured to ensure that the air valve 1 is stably fixed to the inflatable body 201.

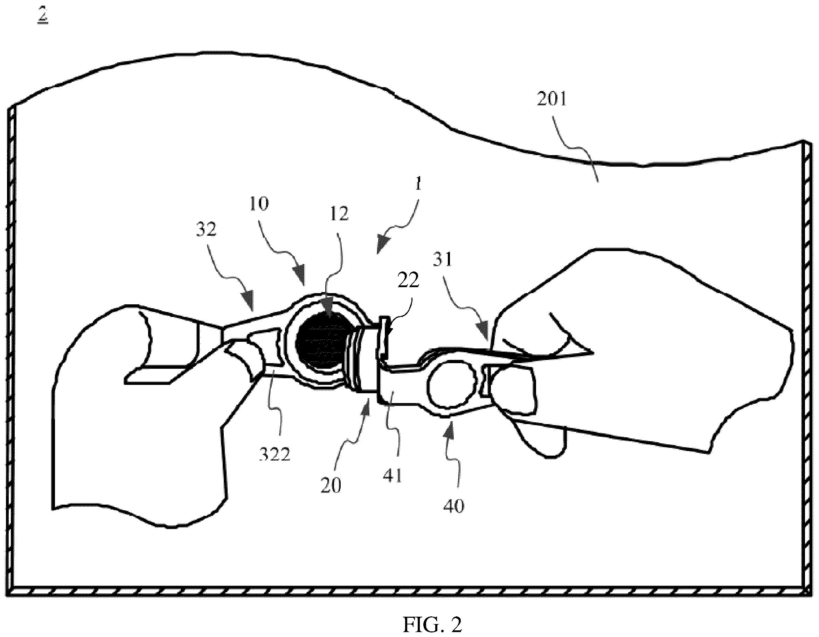

Referring now to FIG. 2, the valve cap 40 of the air valve 1 may be opened without removing the valve element 20 in order to adjust an air pressure inside the inflatable product. In these embodiments, a user may remove the valve cap 40 from the air valve 1 by grasping the first hand-held portion 31 of the hand held portion 30 with an appendage (e.g. a hand) and grasping the second hand-held portion 322 with another hand. It should be appreciated that, although the valve cap 40 is removed from the air valve 1, the force of pulling out the valve cap 40 may not be sufficient to remove the valve element 20 from the valve seat 10, such that the valve element 20 of the air valve 1 remains secured in position.

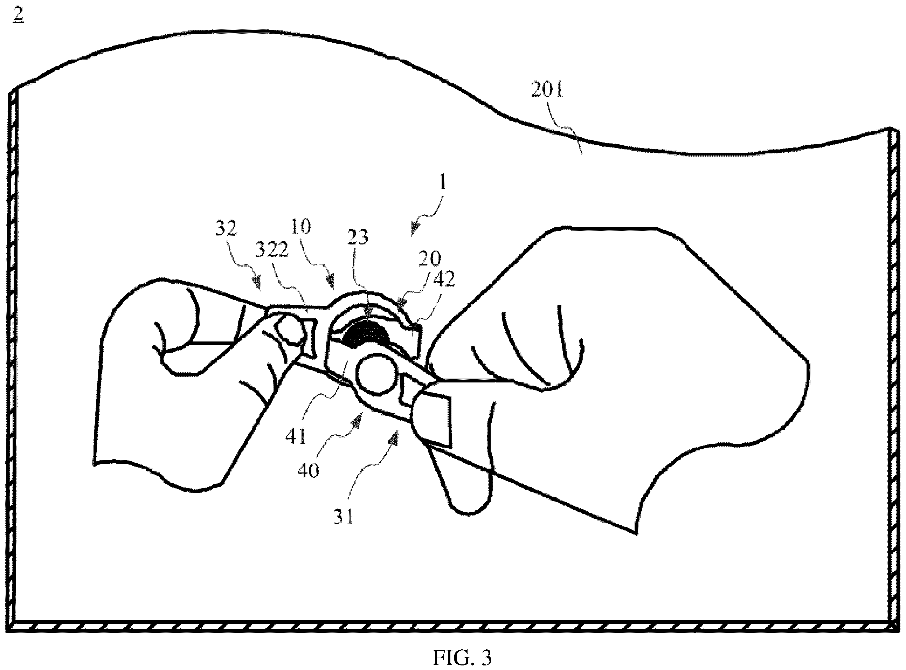

However, as shown in FIG. 3, when a user desires to rapidly deflate the inflatable product 2, the valve element 20 may be removed from the valve seat 10. In these embodiments, the user may grasp the first hand-held portion 31 with a first hand and apply a force (e.g. a force greater than the force used to remove the valve cap 40 from the air valve 1) to pull the first hand-held portion 31 outwards, such that the valve element 20 attached to the valve cap 40 may be removed from the valve seat 10. As depicted in FIG. 3, it should be appreciated that the air valve 1 may be considered to be in a fully opened position when the valve cap 40 and the valve element 20 are both removed from the air valve 1. With the valve element 20 removed, the user may rapidly deflate the inflatable product 2 or slightly adjust the air pressure inside the inflatable product 2.

In view of the foregoing, it should be appreciated that by providing the hand-held portion 30 (e.g., the first hand-held portion 31 and the second hand-held portion 322), the user may conveniently operate the air valve 1 to adjust the air pressure inside the inflatable product 2 and/or realize rapid deflation. Furthermore, the user is able to operate the air valve 1 without having any components of the air valve 1 engage with and/or drag across a surface material of the inflatable product 2, which may aid in alleviating damage to the inflatable product 2 and prolonging the service life of the inflatable product 2.

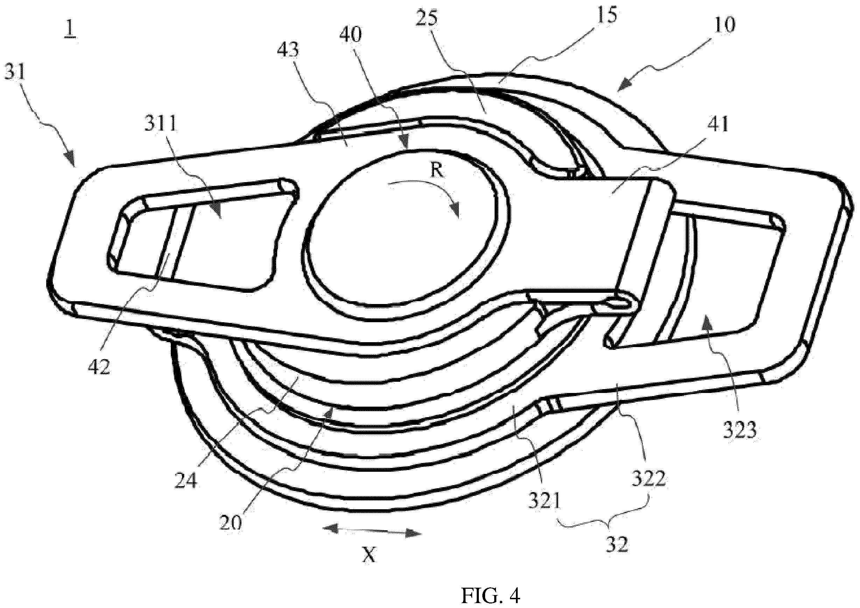

The structure and operation of the air valve 1 will now be described in additional detail. For example, as noted hereinabove, the air valve 1 is movable between a closed position, a partially open position, and a fully open position. The operation of the air valve 1, and the structure of the air valve 1 in the various positions described herein, will be described with reference to FIGS. 4 - 10B.

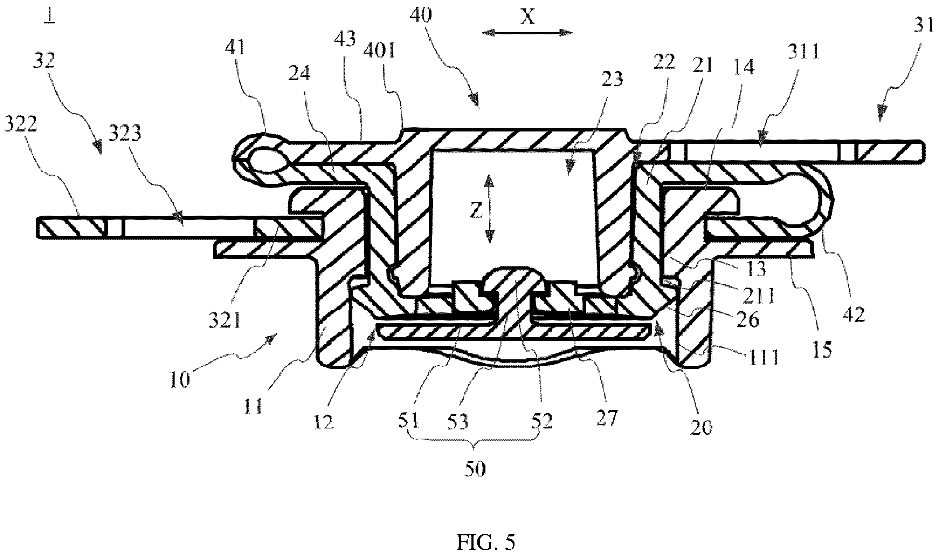

Referring now to FIGS. 4 and 5, the air valve 1 is depicted in the closed position. For example, FIG. 4 shows a schematic view of the air valve 1 in the closed position, while FIG. 5 depicts a cross-sectional view of the air valve 1 in the closed position.

As depicted in FIGS. 4 and 5, in the closed position, the valve seat 10 may be provided with a first hollow tube member 11. In these embodiments, the first air passage 12 may extend through the first hollow tube member 11, and may be used for rapid deflation of the air valve 1, as has been described in detail herein with reference to FIGS. 1-4.

As further illustrated in FIGS. 4 and 5, the valve element 20 may be provided with a second hollow tube member 21, and the second hollow tube member 21 may define the first opening 22. As shown most clearly in FIG. 5, the second hollow tube member 21 of the valve element 20 may be at least partially arranged in the first hollow tube member 11. Furthermore, when the air valve 1 is in the closed state, the valve cap 40 is received by the second hollow tube member 21 of the valve element 20, and the second hollow tube member 21 is hermetically arranged in the first hollow tube member 11 of the valve seat 10. In the embodiments described herein, the term "hermetically arranged" may refer to an arrangement in which an airtight and/or watertight seal is formed between components. Accordingly, it should be appreciated that the second hollow tube member 21 may be arranged within the first hollow tube member 11 such that a seal is formed between the second hollow tube member 21 and the first hollow tube member 11.

Referring still to FIGS. 4 and 5, the first air passage 12 may be defined inside the first hollow tube member 11, and a second air passage 23 may be defined inside the second hollow tube member 21. For example, as shown most clearly in FIG. 5, the second hollow tube member 21 of the valve element 20 may be inserted into the first air passage 12 of the first hollow tube member 11. In some embodiments, the first opening 22 may provide an opening of a different size from the first air passage 12 of the first hollow tube member 11, and the diameter of the second air passage 23 may be smaller than that of the first air passage 12. For example, in the embodiments described herein, the first air passage 12 may be a maximum-diameter air passage of the air valve 1 which allows rapid deflation of the inflatable product.. That is, the first air passage 12 may be in communication with an air chamber inside the inflatable product 2 when the air valve 1 is in the completely opened state, such that air may escape the inflatable product 2 via the first air passage 12 (e.g., the maximum-diameter air passage) to allow for rapid deflation of the inflatable product. In the embodiments described herein, it should be understood that the first air passage 12 and the first opening 22 are of different sizes, such that the air valve 1 may be capable of performing multiple functions in a variety of inflatable products. For example, as has been described in detail herein, the air valve 1 may be used for rapid deflation of the inflatable product and/or adjustment of the air pressure inside the inflatable product.

As further illustrated in FIG. 4, in these embodiments, the first hand-held portion 31 may extend outwardly along an edge of the valve cap 40. The first hand-held portion 31 may also be attached to the valve cap 40, and the valve cap 40 may be flexibly connected to the valve element 20 by means of a first connecting strap 41. For example, in the embodiments described herein, the first connecting strap 41 may be an elastic strap formed of rubber, silicone, TPU, or any other similar material capable of flexibly connecting the valve element 20 to the valve cap 40. Furthermore, although the valve cap 40 is depicted as being coupled to the valve element 20 via a connecting strap, it should be appreciated that other flexible connection mechanisms are contemplated herein without departing from the scope of the present disclosure. For example, in some embodiments, the valve cap 40 may be coupled to the valve element 20 using a hinged j oint, a ball and socket mechanism, a spring mechanism, a tether (e.g., corded tether), a flexible bridge, a magnetic attachment, a living hinge, or any other similar mechanism without departing from the scope of the present disclosure.

In the embodiments described herein, it should be further understood that the valve cap 40 may be sized to be adapted to the first opening 22, such that the air valve 1 may be blocked and sealed when in the closed position.

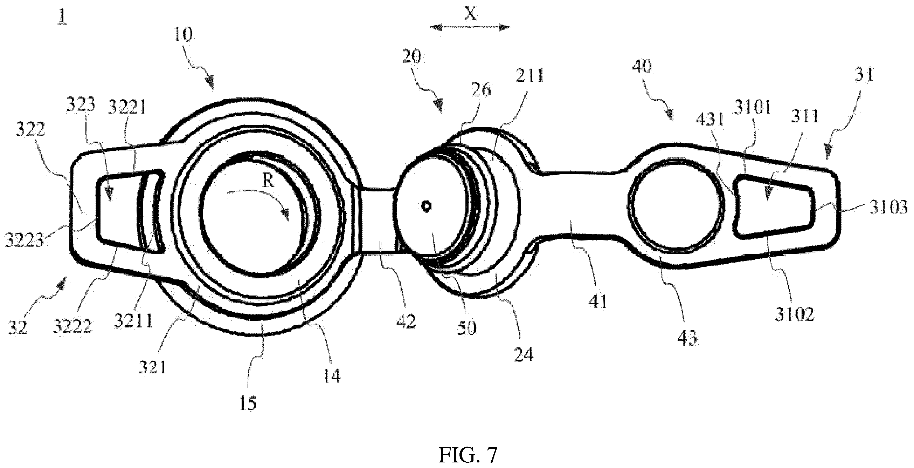

Referring still to FIG. 4, the valve element 20 may be connected to the valve seat 10 by means of a fixing ring 32. In these embodiments, the fixing ring 32 may include an annular part 321 and a second hand-held portion 322, with the second hand-held portion 322 extending outwardly along an edge of the annular part 321. In some embodiments, the second hand-held portion 322 may extend outwardly along the edge of the annular part 321, and may be arranged opposite the first hand-held portion 31 in a radial direction X of the first opening 22, As illustrated in FIG. 4, the annular part 321 may be arranged on the first hollow tube member 11 of the valve seat 10 and may be connected to the valve element 20 by means of a second connecting strap 42. It should be appreciated that the second connecting strap 42 may be a flexible strap (e.g., elastic strap) similar to that of the first connecting strap 41, or any other connecting strap described herein. Furthermore, embodiments of the fixing ring 32 and the first hand-held portion 31 will be described in additional detail herein with reference to FIG. 7, in which the air valve is depicted in the fully opened position.

Referring now to FIGS. 4 and 5, it should be appreciated that each of the first connecting strap 41 and the second connecting strap 42 are in a folded position when the air valve 1 is in the closed position. In these embodiments, and as shown most clearly in FIG. 5, the first connecting strap 41 and the second connecting strap 42 may include drop-shaped creases at their folds when the air valve 1 is in the closed position. In these embodiments, the creases formed in the first connecting strap 41 and the second connecting strap 42 may allow the first connecting strap 41 and the second connecting strap 42 to bend and flex more easily when the valve cap 40 is moved between the closed position and the open (e.g., partially or fully) position. Furthermore, the creases may provide a point of flexion in each of the first and second connecting straps 41, 42, which may reduce the risk of tearing and/or breaking of the straps due to repeated use and/or large forced exerted on the straps. The creases may further provide enhanced ergonomics for a user of the air valve 1, as the creases may make it easier for the user to manipulate the first and second connecting straps 41, 42, respectively.

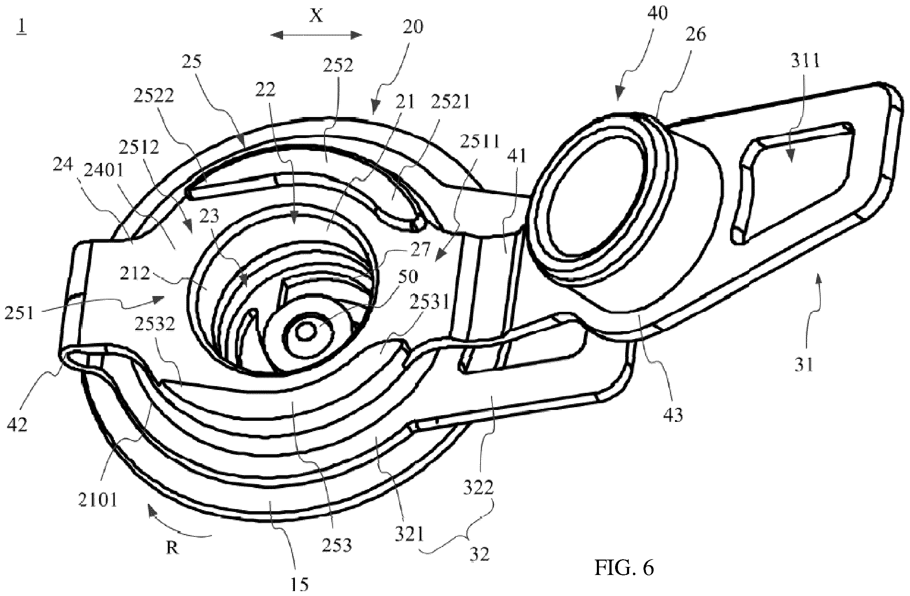

Turning now to FIGS. 6 and 7, the air valve 1 is depicted in the partially open position and the fully open position, respectively. As depicted in FIG. 6, in the partially open position, the valve cap 40 is opened outwards, the first connecting strap 41 is opened outwards, and the second connecting strap 42 remains in the folded state. In the fully open position, as shown in FIG. 7, the valve element 20 is removed from the valve seat 10. For example, as shown in FIG. 7 the air valve 1 is in the fully opened state, the second connecting strap 42 is opened outwards, and each of the first connecting strap 41 and the second connecting strap 42 are in an unfolded state.

In some embodiments, such as those depicted in FIGS. 6 and 7, the first connecting strap 41, the second connecting strap 42, the fixing ring 32, an edge of the valve element 20 and the edge of the valve cap 40 may be integrally formed into an integral component, and the valve element 20 and the valve cap 40 that are connected to each other may be arranged on the valve seat 10 by means of the fixing ring 32. Accordingly, it should be appreciated that the integral component (e.g., the first connecting strap 41, the second connecting strap 42, the fixing ring 32, an edge of the valve element 20, and the valve cap 40) can be connected to the valve seat 10, thereby ensuring that the valve element 20 and/or the valve cap 40 is not lost and/or detached from the valve seat 10 when the air valve 1 is in the completely open or the partially open state.

Referring still to FIGS. 6 and 7, and as described in detail herein, the position of the valve cap 40 and/or the valve element 20 may be adjusted as the air valve 1 is moved between the partially open position (e.g., FIG. 6) and the fully open position (e.g., FIG. 7). For example, FIG. 6 shows the air valve 1 in the partially open position, in which the valve cap 40 is pulled out of the second hollow tube member 21 of the valve element 20, and the valve element 20 remains within from the valve seat 10. In contrast, FIG. 7 depicts the air valve 1 in the completely open position, in which both of the valve cap 40 and the valve element 20 are removed from the valve seat 10.

In the partially open position, as shown in FIG. 6, the first hand-held portion 31 is attached to the valve cap 40 and the first hand-held portion 31 may drive, under a pulling force exerted on the first hand-held portion by the user, the valve cap 40 to move towards the outside of the second hollow tube member 21. As the user continues to apply the pulling force to the valve cap 40, the valve cap 40 may be pulled out of the second hollow tube member 21, thereby causing the air valve 1 to be moved to the partially open position. With the air valve 1 in the partially open position, the user may adjust the air pressure inside the inflatable product 2 by pressing the base 27, which is arranged in the second hollow tube member 21 for fixing the valve diaphragm 50, or inflate the inflatable product 2 with the aid of an inflatable device, such as an air pump, by means of the second hollow tube member 21.

Referring again to FIGS. 6 and 7, the air valve 1 further includes the base 27 for fixing the valve diaphragm 50. In these embodiments, the base 27 is arranged in the second hollow tube member 21, and the valve diaphragm 50 is arranged on the base 27, with the valve diaphragm 50 being configured to open and close the second air passage 23. For example, as shown most clearly in FIG. 6, when the user opens the valve cap 40 with the aid of the first hand-held portion 31 and the second hand-held portion 322, the valve diaphragm 50 arranged in the second hollow tube member 21 is configured to move towards the inside of the air chamber of the inflatable product 2 in an extension direction of the second hollow tube member 21 (as shown in a direction Z in FIG. 5) under the action of an external force. In these embodiments, the external force applied to the valve diaphragm 50 causes the valve diaphragm 50 to move away from the first opening 22 to an open position, such that an external environment is in communication with the second air passage 23 of the air valve 1 and the air chamber inside the inflatable product 2. In these embodiments, the air valve 1 is in the partially open position, and the user may adjust the air pressure in the air chamber inside the inflatable product 2according to the desired comfort requirement of the user (e.g., the hardness of the inflatable product 2, etc.).

Referring still to FIGS. 6 and 7, in some embodiments, a combination of the valve element 20, the valve cap 40 and the first hand-held portion 31 may be attached to the valve seat 10 by means of the fixing ring 32. For example, when the air valve 1 is in the partially open position, the first hand-held portion 31 may continue to drive the valve cap 40 to move outwardly when the user continues exerting an outward pulling force to the first hand-held portion 31 with the aid of the first hand-held portion 31 and the second hand-held portion 322. In these embodiments, the continued pulling force may cause the valve element 20 to move outwardly with the first hand-held portion 31 and the valve cap 40, such that the valve element 20 is removed from the first hollow tube member 11 of the valve seat 10 to communicate the first air passage 12 with the outside. Once the valve element 20 is removed from the first air passage 12, the air valve 1 may be in the fully open state, and the air valve 1 may perform rapid deflation, as has been described in detail herein.

Referring still to FIGS. 6 and 7, the second hand-held portion 322 of the fixing ring 32 may be attached to the valve seat 10 by the annular part 321, and the first hand-held portion 31 may be attached to the valve element 20 by means of the valve cap 40 and the first connecting strap 41. In these embodiments, when the user needs to open the valve cap 40 of the air valve 1 to adjust the air pressure inside the inflatable product, or to unplug the valve element 20 of the air valve 1 for rapid deflation, the first hand-held portion 31 and the second hand-held portion 322 can provide gripping spaces for both hands of the user without additional gripping of the surface material of the inflatable product, which may allow the user to conveniently to operate the air valve 1.

As further depicted in FIGS. 6 and 7, the first hand-held portion 31 may further include a first hole 311. For example, as shown in FIG. 7, at least a portion of the first hand-held portion 31 may be configured as a portion (e.g., a first portion) of a hole wall of the first hole 311, and at least a portion of the edge of the valve cap 40 may be configured as the other portion (e.g., a second portion) of the hole wall of the first hole 311. In these embodiments, the valve cap 40 is also provided with a second annular flange 43 arranged on an end portion of the valve cap 401. Accordingly, it should be appreciated that, in the embodiments described herein, the first hand-held portion 31 and the second annular flange 43 may jointly define the first hole 311.

Referring now to FIG. 7, the first hand-held portion 31 may further include a first inner wall 3101 and a second inner wall 3102 arranged opposite each other, and a third inner wall 3103 positioned between the first inner wall 3101 and the second inner wall 3102. In these embodiments the third inner wall 3103 may be arranged opposite at least a portion of an outer side wall of the second annular flange 431, such that the first inner wall 3101, the second inner wall 3102, the third inner wall 3103 and at least the portion of the outer side wall of the second annular flange 431 jointly serve as the hole wall of the first hole 311 and jointly define the first hole 311.

Referring still to FIG. 7, the second hand-held portion 322 also includes a second hole 323. At least a portion of the second hand-held portion 322 may be configured as a portion (e.g., a first portion) of a hole wall of the second hole 323, and at least a portion of the annular part 321 is configured as the other portion (e.g., a second portion) of the hole wall of the second hole 323. Accordingly, it should be appreciated that the second hand-held portion 322 and the annular part 321 may jointly enclose the second hole 323.

As further illustrated in FIG. 7, the second hand-held portion 322 may also include a fourth inner wall 3221 and a fifth inner wall 3222 arranged opposite each other, and a sixth inner wall 3223 positioned between the fourth inner wall 3221 and the fifth inner wall 3222. In these embodiments, the sixth inner wall 3223 may be arranged opposite at least a portion of an outer side wall of the annular part 3211, such that the fourth inner wall 3221, the fifth inner wall 3222, the sixth inner wall 3223 and at least the portion of the outer side wall of the annular part 3211 jointly serve as the hole wall of the second hole 323 and jointly define the second hole 323.

In these embodiments described herein, it should be appreciated that the second hole 323 and the first hole 311 provide additional gripping spaces, which may allow the user to firmly grip the first hand-held portion 31 and the second hand-held portion 322. Similarly, in some embodiments, the first hole 323 and the first hole 311 may allow for the user to place fingers into the first hole 311 and the second hole 323 when opening the air valve 1, which may allow for easier opening of the air valve 1. In addition, by providing the first hole 311 and the second hole 323 as provided herein, the manufacturing cost savings may be realized via reduction in materials.

In some embodiments, it should be further appreciated that the first hand-held portion 31 and the second hand-held portion 322 of the fixing ring 32 are respectively located on two opposite sides of the valve element 20 in the radial direction X of the first opening 22 of the valve element 20 when the air valve 1 is in the closed position (e.g., the valve cap 40 is positioned within the first opening 22). Accordingly, it may be convenient for the user to operate the air valve with both hands to open or close the air valve 1.

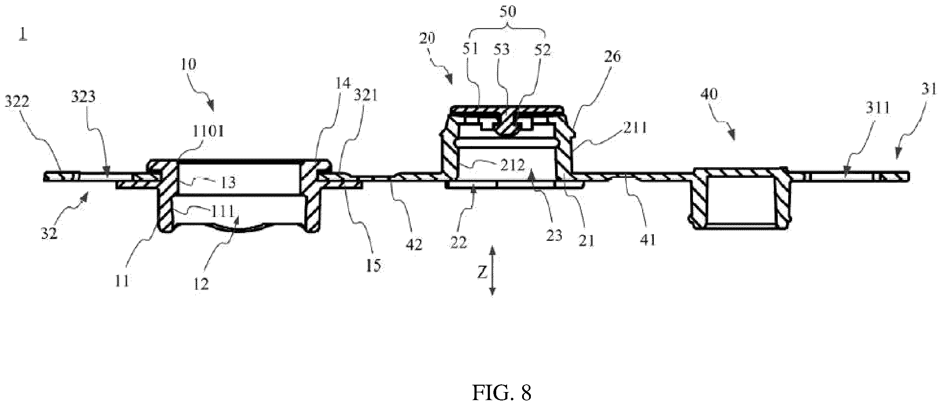

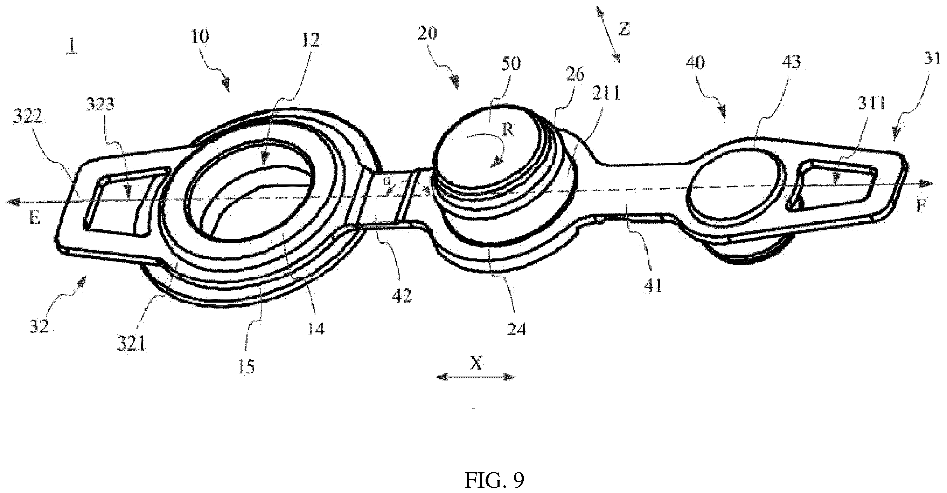

Referring now to FIGS. 8 and 9, it should be further noted that the relative positions of the first hand-held portion 31 and the second hand-held portion 322 are not limited in the embodiments of the present disclosure, and may include any positions that allow are convenient to grip and open or close the air valve 1. For example, in some embodiments, an angle α is formed between an extension direction of the second hand-held portion 322 (as shown in a direction E in FIG. 9) and an extension direction of the first hand-held portion 31 (as shown in a direction F in FIG. 9) when the air valve 1 is in the fully open position. In these embodiments, the angle α formed between the extension direction of the second hand-held portion 322 and the extension direction of the first hand-held portion 31 is 0°< α ≤ 180°.

Accordingly, in these embodiments, the extension direction of the second hand-held portion 322 may also be at a right angle or other angles relative the extension direction of each of the first hand-held portion 31, the first connecting strap 41 and the second connecting straps 42. For example, the extension direction of the second hand-held portion 322 may not be in the same line as the extension direction of each of the first connecting strap 41 and the second connecting strap 42, and the angle between the first hand-held portion 31 and the second hand-held portion 322 may be 60 degrees, 90 degrees, 120 degrees, 135 degrees, or any other degree value within the range of degrees described herein (e.g., between 0 degrees and 180 degrees).

In other embodiments, the first hand-held portion 31 and the second hand-held portion 322 may be located on the two opposite sides of the valve element in the radial direction X of the first opening 22 of the valve element 20 when the air valve 1 is in the closed position. Accordingly, when the air valve 1 is in the closed position an angle of 180 degrees is formed between the first hand-held portion 31 and the second hand-held portion 322. However, the first hand-held portion 31 may be at any other angle, such as an acute angle, a right angle or an obtuse angle, to the second hand-held portion 322, and the angle between the first hand-held portion 31 and the second hand-held portion 322 may be any angle that allows for the air valve 1 to be moved to the partially open position or the fully open position.

Referring again to FIGS. 6 and 7, in some embodiments, the valve element 20 may also be provided with a first annular flange 24 that is arranged on an end portion of the second hollow tube member 2101. The end portion 2101 of the second hollow tube member 21, when in a closed operative position, is an outer end portion of the same second hollow tube member. In these embodiments, the valve cap 40 may similarly be provided with a second annular flange 43.

As shown most clearly in FIG. 6, the first annular flange 24 may be connected to the second annular flange 43 by the first connecting strap 41, and the first hand-held portion 31 may be attached to the second annular flange 43. Accordingly, it should be appreciated that the first connecting strap 41 may be directly connected to the first annular flange 24 and the second annular flange 43. Furthermore, in these embodiments, the first connecting strap 41, the first annular flange 24 and the second annular flange 43 may be integrally formed into an integral component. It should be understood that the connecting strap is not limited to the embodiments described herein, and may include other features and/or components so long as the combination of the valve cap 40, the valve element 20 and the fixing ring 32 are formed as an integral component with the air valve 1 by means of the connecting strap. When the valve cap 40 is in a closed position, the second annular flange 43 results superimposed on the first annular flange 24, as illustrated in FIG. 5.

Referring still to FIG. 6, in some embodiments, the valve element 20 may further include a limiting portion 25. In these embodiments, the limiting portion 25 may be arranged on an upper surface 2401 of the first annular flange 24 and may define a limiting space 251. As depicted in FIG. 6, the limiting space 251 may be configured to accommodate the second annular flange 43, so as to fix the second annular flange 43 to the upper surface 2401 of the first annular flange 24 of the valve element 20. In the embodiments described herein, the limiting portion 25 may further include a first projection 252 having a first end 2521 and a second end 2522, and the limiting portion 25 further includes a second projection 253 having a third end 2531 and a fourth end 2532.

Referring still to FIG. 6, in some embodiments, each of the first projection 252 and the second projection 253 may protrude from the upper surface 2401 of the first annular flange 24. In a circumferential direction of the valve seat 10 (as shown in a direction R in FIG. 6), the first end 2521 and the third end 2531 may be spaced apart to define a first notch 2511 of the limiting space 251, and the second end 2522 and the fourth end 2532 may be spaced apart to define a second notch 2512 of the limiting space 251. As further depicted in FIG. 6, a portion of the second annular flange 43 (e.g. a first portion) may be accommodated in the first notch 2511, and a further portion of the second annular flange 43 (e.g., a second portion) may be accommodated in the second notch 2512 when the air valve 1 is in the closed position.

In the embodiments described herein, the first projection 252 and the second projection 253 may jointly define the limiting space 251, as has been described in detail above, and inner walls of the first projection 252 and the second projection 253 are both configured to be adapted to portions of outer walls of the second annular flange 43 and of the first hand-held portion 31. For example, as depicted in FIG. 6, the second projection 253 may be arranged on the upper surface of the first annular flange 24 and spaced apart from the first projection 252 in a circumferential direction of the second hollow tube member 21.

Furthermore, when the air valve 1 is in the closed position, the second annular flange 43 and a portion of the first hand-held portion 31 may be accommodated in the limiting space 251, such that a side wall of the limiting portion 25 will not interfere with the opening or closing of the valve cap 40. In addition, the limiting portion 25 may also aid in positioning the valve cap 40 to prevent the valve cap 40 from deflection and reducing the space occupied by the air valve 1.

Referring now to FIG. 8, the air valve 1 is depicted in the fully open position. As shown most clearly in FIG. 8, the valve seat 10 may further include a protrusion 13 that extends in a circumferential direction of the first hollow tube member 11 and is arranged on an inner wall of the first hollow tube member 111. This protrusion 13 protrudes internally, along the entire circumferential direction, from the upper portion of the inner wall 111 of the first hollow tube member 11, to reduce the internal diameter of the inner wall 111 and realizing an undercut with the lower part of the inner wall 111 of the first hollow tube member 11. In these embodiments, the valve element 20 further includes a sealing rib 26, and the sealing rib 26 extends in a circumferential direction of the second hollow tube member 21 and is arranged on an outer wall of the second hollow tube member 211. The sealing rib 26 is configured to abut against the inner wall of the first hollow tube member 111 to seal the air valve when the air valve 1 is in the closed position.

Referring still to FIG. 8, the protrusion 13 may protrude from the inner wall of the first hollow tube member 111 in the circumferential direction of the valve seat 10, realizing the undercut, and the sealing rib 26 may be arranged on the outer wall of the second hollow tube member 211 in the circumferential direction of the valve seat 10. In these embodiments, the sealing rib 26 may abut the inner wall of the first hollow tube member 111 below the protrusion 13, therefore below the undercut, and a protruding step structure as described below in the extension direction of the first hollow tube member 11. In other words, the sealing rib 26 abuts a lower surface (the undercut) of the protrusion 13 in a radial direction of the first opening 22.

In the embodiments described herein, the protrusion 13, namely, the protruding step structure along the inner wall of the first hollow tube member 111, may be arranged on the inner wall of the first hollow tube member 111 of the valve seat 10 of the air valve 1. Furthermore, as illustrated in FIG. 8 the sealing rib 26 on the outer wall of the second hollow tube member 211 abuts the inner wall of the first hollow tube member 111 at the protruding step structure, and the sealing rib 26 enables the air valve 1 to form a seal. It should be appreciated that the air valve 1 described herein may achieve the sealing effect without the need for complex structure and/or grooves, and is also able to, facilitate molding of the structure of the air valve 1 to reduce the cost of manufacturing. Referring now to FIGS. 9 - 10B, additional embodiments of the air valve 1 are depicted. For example, as illustrated in FIG. 9, the valve seat 10 may also be provided with a third annular flange 14 arranged around the circumference of the first hollow tube member 11. In these embodiments, the third annular flange 14 extends radially outwards along an edge of the first hollow tube member 11 and is arranged on an outer side of a first end of the first hollow tube member 1101.

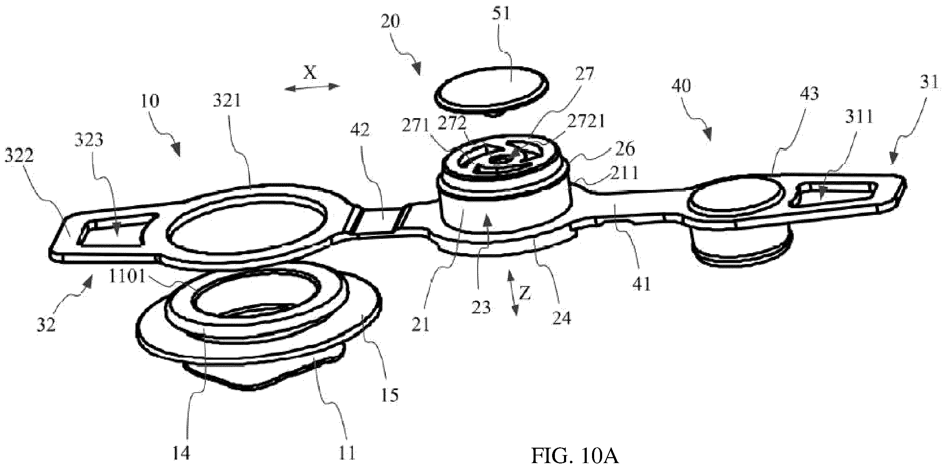

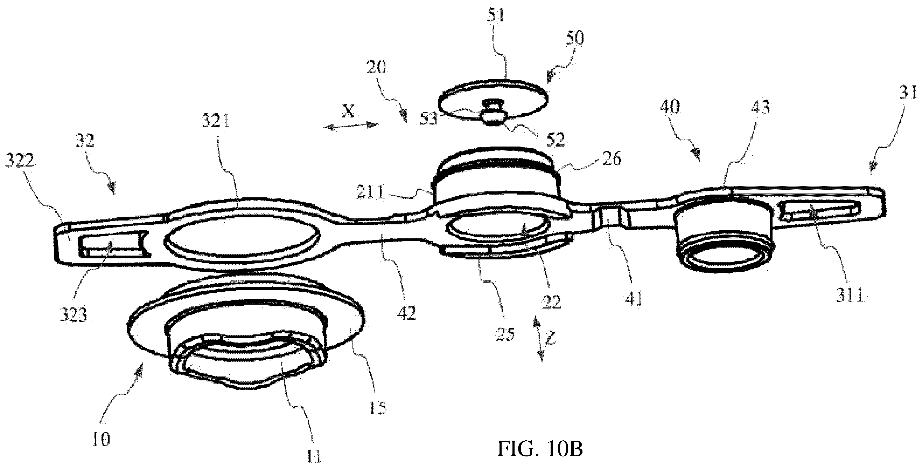

Turning now to FIGS. 10A and 10B, the valve seat 10 may further include a connecting ring 15. In these embodiments, the connecting ring 15 may be connected to the first hollow tube member 11, and the connecting ring 15 may be configured to lie flush with and form a seal with the surface material of the inflatable product 2 (e.g., as shown in FIGS. 2 and 3). As shown in FIGS. 10A and 10B, the first hollow tube member 11 may extend through an opening (for example, the mounting hole) of the inflatable product 2, and the connecting ring 15 may be fastened or hermetically fitted to a material around the mounting hole of the inflatable product 2 by a high-frequency welding process or gluing.

As further depicted in FIGS. 10A and 10B, in some embodiments the annular part 321 of the fixing ring 32 may be arranged between the connecting ring 15 and the third annular flange 14, so that the second hand-held portion 322 is attached to the valve seat 10. Furthermore, in other embodiments still, it should be appreciated that the valve element 20 may further include the base 27, and the base 27 is arranged in the second hollow tube member 21.

In these embodiments, the base 27 may also include a plurality of connecting arms 271 and a positioning seat 272. The positioning seat 272 may be arranged in the middle of the second air passage 23, and in any radial direction of the valve element 20 (e.g., the radial direction X of the first opening 22, as shown in FIG. 10a). Furthermore, the distance between the positioning seat 272 and the inner wall of the second hollow tube member 212 may be constant across a length of the second hollow tube member 12, such that the positioning seat 272 and the valve element 20 are concentrically arranged. In these embodiments, the positioning seat 272 may be connected to the inner wall of the second hollow tube member 212 by means of three connecting arms 271.

In the embodiments described herein, a length of each connecting arm 271 of the three connecting arms 271 in an extension direction may be greater than a shortest distance between the positioning seat 272 and the inner wall of the second hollow tube member 212. Accordingly, the connecting arm 271 has a greater length in the extension direction, such that the connecting arm 271 is more easily deformable. Because the connecting arm 271 may be more easily deformable, it should be understood that the user exerts less effort in deflating the inflatable product by pressing the base 27.

Referring now to FIG. 10B, in some embodiments, the valve diaphragm 50 may also include a valve diaphragm body 51, a spherical portion 52, and a shaft 53. In these embodiments, the positioning seat 272 is provided with a corresponding positioning hole 2721, the valve diaphragm body 51 is in a sheet shape, the valve diaphragm body 51 is fixed below the positioning seat 272 in the extension direction Z of the second hollow tube member 21, and the valve diaphragm body 51 may seal the first opening 22 to prevent leakage of the inflatable product 2.

Referring again to FIGS. 10A and 10B, the valve diaphragm body 51 and the spherical portion 52 may also be connected by means of the shaft 53. For example, one end of the shaft 53 may be fixed to the valve diaphragm body 51 and the other end of the shaft 53 may be fixed to the spherical portion 52. In these embodiments, when the user needs to deflate the inflatable product 2, the positioning seat 272 and the spherical portion 52 are pressed, and the valve diaphragm 50 opens with the aid of deformation of the connecting arm 271 to deflate the inflatable product 2. Upon completion of the deflation, the positioning seat 272 and the spherical portion 52 may be released, such that the valve diaphragm 50 can be restored to a sealing state based on the deformation of the connecting arm 271 to re-seal the inflatable product 2.

The foregoing descriptions are only embodiments of the present disclosure and are not intended to limit the present disclosure. For those skilled in the art, various changes and variations can be made to the present disclosure. Any modifications, equivalent replacements, and improvements made without departing from the spirit and principle of the present disclosure shall fall within the scope of the claims of the present disclosure.

Furthermore, it should be apparent that the present disclosure is not limited to the details of the above-mentioned exemplary embodiments, and the present disclosure can be implemented in other specific forms without departing from the spirit or basic features of the present disclosure. Therefore, no matter from which point of view, the embodiments should all be regarded as exemplary and non-limiting. The scope of the present disclosure is defined by the appended claims rather than the above-mentioned description, and therefore it is intended that all changes which fall within the meaning and range of equivalents of the claims are embraced in the present disclosure. Any reference signs in the claims should not be construed as limiting the claims involved. In addition, it is apparent that the word "comprise/include" does not exclude other elements or steps, and the singular does not exclude the plural. The terms first, second, etc. are used for designations and do not represent any particular order.

It should be understood that the embodiments as shown in the drawings only show the optional shapes, sizes and arrangements of optional components of the air valve and inflatable products according to the present disclosure, which are merely illustrative but not restrictive, and other shapes, sizes and arrangements may be employed without departing from the idea and scope of the present disclosure.

The technical contents and technical features of the present disclosure are disclosed above, but it can be understood that those skilled in the art would have made various variations and improvements to the concepts disclosed above under the creative idea of the present disclosure, and all the variations and improvements fall into the scope of protection of the present disclosure. The descriptions of the above embodiments are illustrative but not restrictive, and the scope of protection of the present disclosure is determined by the claims.

## Claims

1. An air valve, comprising:
a valve seat (10) comprising:
a first hollow tube member (11) defining a first air passage (12);
a valve element (20) comprising:
a first opening (22); and
a second hollow tube member (21) defining a second air passage (23), the second hollow tube member (21) being at least partially arranged in the first hollow tube member (11);
a valve cap (40) at least partially arranged in the second hollow tube member (21) and connected to the valve element (20) by means of a first connecting strap (41), the valve cap (40) comprising:
a first hand-held portion (31) extending outwards along an edge of the valve cap (40);
a valve diaphragm (50) arranged in the second hollow tube member (21) and configured to open and close the second air passage (23); and
a fixing ring (32) comprising:
an annular part (321); and
a second hand-held portion (322) extending outwards along the annular part (321);
wherein the annular part (321) is arranged on the first hollow tube member (11) and is connected to the valve element (20) by a second connecting strap (42).

2. The air valve according to claim 1, wherein an angle (α) that is greater than 0 degrees and less than or equal to 180 degrees is formed between an extension direction of the first hand-held portion (31) and an extension direction of the second hand-held portion (322).

3. The air valve according to claim 1, wherein the first hand-held portion (31) comprises a first hole (311), and the second hand-held portion (322) comprises a second hole (323).

4. The air valve according to claim 1, comprising:
a first annular flange (24) arranged on an end portion (2101) of the second hollow tube member (21); and
a second annular flange (43) arranged on an end portion (401) of the valve cap (40);
wherein the first annular flange (24) is connected to the second annular flange (43) by the first connecting strap (41), and the first hand-held portion (31) is attached to the second annular flange (43).

5. The air valve according to claim 4, wherein the valve element (20) further comprises a limiting portion (25) having a limiting space (251), the limiting portion (25) being arranged on an upper surface of the first annular flange (24), and the second annular flange (43) being arranged in the limiting space (251).

6. The air valve according to claim 5, wherein the limiting portion (25) comprises:
a first projection (252); and
a second projection (253) arranged on the upper surface of the first annular flange (24) and spaced apart from the first projection (252) in a circumferential direction of the second hollow tube member (21), the first projection (252) and the second projection (253) jointly defining the limiting space (251);
wherein the limiting space (251) comprises a first notch (2511) and a second notch (2512), a first portion of the second annular flange (43) is arranged in the first notch (2511), and a second portion of the second annular flange (43) is arranged in the second notch (2512).

7. The air valve according to claim 1, wherein the valve seat (10) comprises a protrusion (13), the protrusion (13) extending in a circumferential direction of the first hollow tube member (11) and being arranged on an inner wall (111) of the first hollow tube member (11); and
the valve element (20) comprises a sealing rib, the sealing rib (26) extending in a circumferential direction of the second hollow tube member (21) and being arranged on an outer wall (211) of the second hollow tube member (21);
wherein the sealing rib (26) abuts a lower surface of the protrusion (13) in a radial direction of the first opening (22).

8. The air valve according to claim 1, wherein the valve seat (10) comprises a connecting ring (15), the connecting ring (15) being connected to the first hollow tube member (11), and the connecting ring (15) being configured to connect the air valve (1) to an inflatable product.

9. The air valve according to claim 8, wherein the valve seat (10) comprises a third annular flange (14), the third annular flange (14) extending radially outwards along an edge of the first hollow tube member (11) and being arranged at a first end (1101) of the first hollow tube member (11); and the annular part (321) of the fixing ring (32) is arranged between the connecting ring (15) and the third annular flange (14).

10. The air valve according to claim 1, wherein the valve element (20) comprises a base (27), the base (27) being arranged in the second hollow tube member (21); and the valve diaphragm (50) is arranged on the base (27).

11. The air valve according to claim 10, wherein the base (27) comprises a plurality of connecting arms (271) and a positioning seat (272); said positioning seat (272) being arranged in the middle of the second air passage (23), in any radial direction of the valve element (20), such that the positioning seat (272) and the valve element (20) are concentrically arranged.

12. The air valve according to claim 11, wherein a length of each connecting arm (271) in an extension direction may be greater than a shortest distance between the positioning seat (272) and an inner wall of the second hollow tube member (21).

13. The air valve according to claim 11, wherein the valve diaphragm (50) comprises a valve diaphragm body (51) having a sheet shape, a spherical portion (52), and a shaft (53); the valve diaphragm body (51) being fixed below the positioning seat (272), provided with a corresponding positioning hole (2721), in the extension direction (Z) of the second hollow tube member (21), and the valve diaphragm body (51) sealing the first opening (22) to prevent leakage of an inflatable product (2).

14. The air valve according to claim 13, wherein the shaft (53) is fixed to the valve diaphragm body (51) and the other end of the shaft (53) is fixed to the spherical portion (52), so when the user needs to deflate the inflatable product (2), the positioning seat (272) and the spherical portion (52) are pressed, and the valve diaphragm (50) opens with the aid of deformation of the connecting arm (271) to deflate the inflatable product (2).

15. An inflatable product, comprising:
an inflatable body (201) provided with a mounting hole; and
an air valve (1) according to one or more of claims 1-14.
